# EUROPÄISCHE PATENTANMELDUNG

(11) **EP 4 671 199 A1**
(43) Veröffentlichungstag der Anmeldung: **31.12.2025**
(21) Anmeldenummer: 24000084.4
(22) Anmeldetag: 28.06.2024
(51) Int. Cl.: C01B 25/18, B01D 15/08, B01D 15/36, B01J 47/011, C01B 25/22, C01B 25/45, C02F 1/42, C02F 1/52, C02F 1/58, C01B 25/28, C05B 7/00, C02F 101/10

(54) **VERFAHREN ZUR RÜCKGEWINNUNG VON PHOSPHAT**

(71) Anmelder: Hallerbach, Bernd, 48324 Sendenhorst (DE)
(72) Erfinder: Die Erfindernennung liegt noch nicht vor

(57) **Zusammenfassung**

Die Erfindung betrifft ein Verfahren zur Rückgewinnung von Phosphat, welches in kristallinem Magnesiumammoniumphosphat vorliegt. Um ein vereinfachtes Verfahren zur Rückgewinnung von Phosphat, welches in kristallinem Magnesiumammoniumphosphat (MAP) vorliegt, zur Verfügung zu stellen, welches sich zudem als leistungsfähig erweist, sieht die Erfindung die folgenden Verfahrensschritte vor:
a) Bereitstellung und Zuführung von bereits existierendem Magnesiumammoniumphosphat in eine Vorrichtung zur Entkristallisierung von Kristallen (10) und Entkristallisierung des Magnesiumammoniumphosphats in seine Bestandteile mithilfe einer Säure, vorzugsweise einer Phosphorsäure und/oder Salzsäure, zur Erzeugung einer wässrigen Lösung (11) in der Vorrichtung (10);
b) Weiterleitung des entkristallisierten Magnesiumammoniumphosphats aus Schritt a) in eine erste Vorrichtung zum Entfernen und/oder Tauschen von Ionen (16) und Entfernen und/ oder Tauschen von Mg²⁺in der ersten Vorrichtung (16);
c) Weiterleitung des resultierenden Ammoniumphosphats aus Schritt b) in eine zweite Vorrichtung zum Entfernen und/oder Tauschen von Ionen (19) und Entfernen und/oder Tauschen von Ammonium in der zweiten Vorrichtung (19).

## Beschreibung

Die Erfindung betrifft ein Verfahren gemäß dem Oberbegriff des Anspruchs 1.

Verfahren der eingangs genannten Art sind aus dem Stand der Technik hinreichend bekannt. Hierbei kommen auch Verfahren zur Anwendung, welche die Gewinnung eines besonders hohen Anteils von Phosphat bzw. von Phosphor aus phosphor-/phosphathaltigen Rohschlamm, der beispielsweise bei der Abwasserhandlung entsteht, 'ermöglichen soll.

Ein solches Verfahren ist in der EP 3 984 966 A1 offenbart. Bei diesem bekannten Verfahren resultiert nach Prozessen des Eindickens von phosphor-/phosphathaltigen Rohschlamms, des Desintegrierens des eingedickten Rohschlamms, des Verdünnens des desintegrierten Rohschlamms sowie des Eindickens des verdünnten desintegrierten Rohschlamms ein flüssiger Anteil mit einem besonders hohen Anteil von Phosphor bzw. Phosphat. Dieser flüssige Anteil wird dann einer Einrichtung zum Abtrennen von Phosphor/Phosphat aus dem zweiten flüssigen Anteil zugeführt. Bei dieser Einrichtung handelt es sich vorzugsweise um einen sogenannten Struvit-Reaktor, wobei in diesem Struvit-Reaktor unter Zugabe von Fällmitteln eine Magnesium-Ammonium-Phosphat-Fällung (MAP-Fällung) erfolgt. Aus einer Einrichtung zum Abtrennen von Phosphor/ Phosphat können dann in bekannter Art und Weise, beispielsweise unter Verwendung von Filtern, Struvit-Kristalle und ein entsprechend phosphor-abgereichertes Filtrat gewonnen werden.

Auch wenn gesetzliche Vorgaben eine Phosphorrückgewinnung aus Klärschlamm bei gleichzeitiger Reduzierung der landwirtschaftlichen Verwertung von Klärschlamm vorsehen, so stellt doch diese Form der Rückgewinnung von Phosphor - wie in der EP 3 984 966 A1 offenbart- eine technisch aufwändiges Verfahren dar, um Phosphor bzw. Phosphat zu erzeugen.

Es ist deshalb Aufgabe der folgenden Erfindung ein vereinfachtes Verfahren zur Rückgewinnung von Phosphat, welches in kristallinem Magnesiumammoniumphosphat (MAP) vorliegt, zur Verfügung zu stellen, welches sich zudem als leistungsfähig erweist.

Diese Aufgabe wird mit den Merkmalen des Anspruchs 1 gelöst.

Vorteilhafte Ausgestaltungen der Erfindung ergeben sich aus den abhängigen Ansprüchen.

Das erfindungsgemäße Verfahren sieht in einem ersten Schritt die Bereitstellung und die Zuführung von bereits existierendem Magnesiumammoniumphosphat in eine Vorrichtung zur Entkristallisierung von Kristallen und die Entkristallisierung des Magnesiumammoniumphosphats mithilfe einer Säure, vorzugsweise einer Phosphorsäure und/oder Salzsäure, zur Erzeugung einer wässrigen Lösung in der Vorrichtung vor und danach die Weiterleitung des entkristallisierten Magnesiumammoniumphosphats in eine erste Vorrichtung zum Entfernen und/oder Tauschen von Ionen und Entfernen und/oder Tauschen von Mg²⁺in der ersten Vorrichtung. In einem letzten Schritt wird dann das resultierende Ammoniumphosphat in eine zweite Vorrichtung zum Entfernen und/oder Tauschen von Ionen weitergeleitet und Ammonium in der Vorrichtung entfernt.

Bei den Vorrichtungen zum Entfernen und/oder Tauschen von Ionen handelt es sich vorzugsweise um Ionenaustaucher, Nanofilter und Vorrichtungen zur Adsorption.

Der Vorteil der Erfindung ist ein vereinfachtes Verfahren zur Rückgewinnung von Phosphat, welches in kristallinem Magnesiumammoniumphosphat vorliegt.

Gemäß der Erfindung erfolgt hierzu keine Rückgewinnung von Phosphat aus Klärschlämmen, Werkstoffen etc. Vielmehr wird das Phosphat mit Beginn des Verfahrens bereitgestellt, indem zunächst eine Entkristallisierung des Magnesiumammoniumphosphats in seine Bestandteile vollzogen wird. Danach können dann schrittweise die Bestandteile abgereichert werden, wozu vorteilhafterweise herkömmliche Methoden vorgesehen sind.

Eine vorteilhafte Weiterentwicklung der Erfindung sieht vor, dass die Entkristallisierung in dem Schritt a) in einem Rührbehälter, in der sich die wässrige Lösung befindet, erfolgt. Bevorzugt erfolgt in dem Schritt b) das Entfernen und/oder Tauschen in der ersten Vorrichtung zum Entfernen und/oder von Ionen mittels Ionenaustausches und/oder Adsorptionsverfahrens.

Eine praktikable Variante der Erfindung sieht vor, dass in dem Schritt c) das Entfernen und/oder das Tauschen in der zweiten Vorrichtung zum Entfernen und/oder Tauschen von Ionen mittels Ionenaustausches und/oder Nanofiltration und/oder eines Adsorptionsverfahrens erfolgt. Ionenaustausch, Nanofiltration und Adsorptionsverfahren sind aus dem Stand der Technik bekannt. Bei einer sehr hohen Ammoniumkonzentration kommen bevorzugt sowohl der Ionenaustausch als auch die Nanofiltration zur Anwendung, d.h. das Ammoniumphosphat durchläuft in der zweiten Vorrichtung zum Entfernen und/oder Tauschen von Ionen einen Ionenaustauscher sowie Nanofilter, wohingegen das Ammoniumphosphat bei geringer Konzentration bevorzugt einen Ionenaustauscher und bei hoher Konzentration vorteilhafterweise einen Nanofilter durchläuft, um abgereichert zu werden.

Gemäß einer weiteren praktikablen Variante der Erfindung erfolgt das Entfernen von Mg2+ in einem Batch-Prozess. Batch Prozesse sind aus dem Stand der Technik bekannt. Im Rahmen der Erfindung ist der Batch-Prozess sinnvoll, weil beispielsweise der Ionenaustauscher einen fortlaufenden effizienten Ionenaustausch nicht unbedingt gewährleistet. Das vorzugsweise verwendete Harz bedarf einer Regeneration, der vorzugsweise mittels Durchflusses von Protonen durch den Harz gewährleistet wird.

Eine Anordnung zur Durchführung des Verfahrens ist ebenfalls Gegenstand der Erfindung. Die Anordnung zeichnet sich durch eine Vorrichtung zur Entkristallisierung von Kristallen, die über eine erste Leitung mit einer ersten Vorrichtung zum Entfernen und/ oder Tauschen von Ionen verbunden ist, aus, wobei die erste Vorrichtung zum Entfernen von Ionen und/oder Tauschen über eine zweite Leistung mit einer zweiten Vorrichtung zum Entfernen und/oder Tauschen von Ionen verbunden ist.

Vorteilhafterweise wird in dem Schritt a) Phosphorsäure in die Vorrichtung zur Entkristallisierung von Kristallen geleitet, um die Entkristallisierung weiter zu befördern.

Das erfindungsgemäße Verfahren erweist sich auch als ein leistungsfähiges Instrumentarium für die Herstellung von Phosphorsäure, was durch die folgenden Beispiele untermauert wird:
Die Eingangslösung der Vorrichtung zur Entkristallisierung von Kristallen enthält Mg²⁺, NH₄⁺, PO₄³⁻ und H₂O.

Die Molekulargewichte dieser Bestandteile sind:
- 6 H2O : 108,09 g/mol
- Mg²⁺ : 24,31 g/mol
- NH₄⁺ : 18,04 g/mol
- PO₄³⁻ : 94,97 g/mol,
sodass sich ein Molekulargewicht von 245,41 g/mol für das Magnesiumammoniumphosphat ergibt. Die Eingangslösung wird mit Phosphorsäure und Wasser so gelöst, dass eine 0,25 molar bis 2 molare Magnesiumammoniumphosphat-Lösung entsteht.

Hierdurch können die folgenden Erträge von Phosphorsäure generiert werden, wobei die Prozentangaben Konzentrationsangaben darstellen, die den Massenanteil pro Volumenanteil (g/Liter) beschreiben:

### Beispiel 1

Lösen des Magnesiumammoniumphosphats in Wasser bis eine 0,25 molare Magnesiumammoniumphsphat-Lösung erhalten wird, die einer 2,35%igen Phosphorsäurelösung entspricht. Im Eingang der ersten Vorrichtung (Ionenaustauscher) sind noch 0,6% Mg²⁺ und 0,45% NH₄⁺ zur weiteren Abreichung vorhanden.

### Beispiel 2

Lösen des Magnesiumammoniumphsphats in Wasser bis eine 1 molare Magnesiumammoniumphsphat-Lösung erhalten wird, die einer 9%igen Phosphorsäurelösung entspricht. Im Eingang der ersten Vorrichtung (Ionenaustauscher) sind noch 2,3% Mg²⁺ und 1,7% NH₄⁺ zur weiteren Abreichung vorhanden.

### Beispiel 3

Lösen des Magnesiumammoniumphsphats in Wasser bis eine 1,5 molare Magnesiumammoniumphsphat-Lösung erhalten wird, die einer 13,2%igen Phosphorsäurelösung entspricht. Im Eingang der ersten Vorrichtung (Ionenaustauscher) sind noch 3,4% Mg²⁺ und 2,5% NH₄⁺ zur weiteren Abreichung vorhanden.

### Beispiel 4

Lösen des Magnesiumammoniumphsphats in Wasser bis eine 2 molare Magnesiumammoniumphsphat-Lösung erhalten wird, die einer 17,2%igen Phosphorsäurelösung entspricht. Im Eingang der ersten Vorrichtung (Ionenaustauscher) sind noch 4,4% Mg²⁺ und 3,3% NH₄⁺ zur weiteren Abreichung vorhanden.

Im Folgenden wird die Erfindung anhand der Zeichnungen näher erläutert.

Es zeigt in schematischer Darstellung:
- Fig. 1: ein Verfahren gemäß der Erfindung und
- Fig. 2: eine weitere Ausführungsform des erfindungsgemäßen Verfahrens

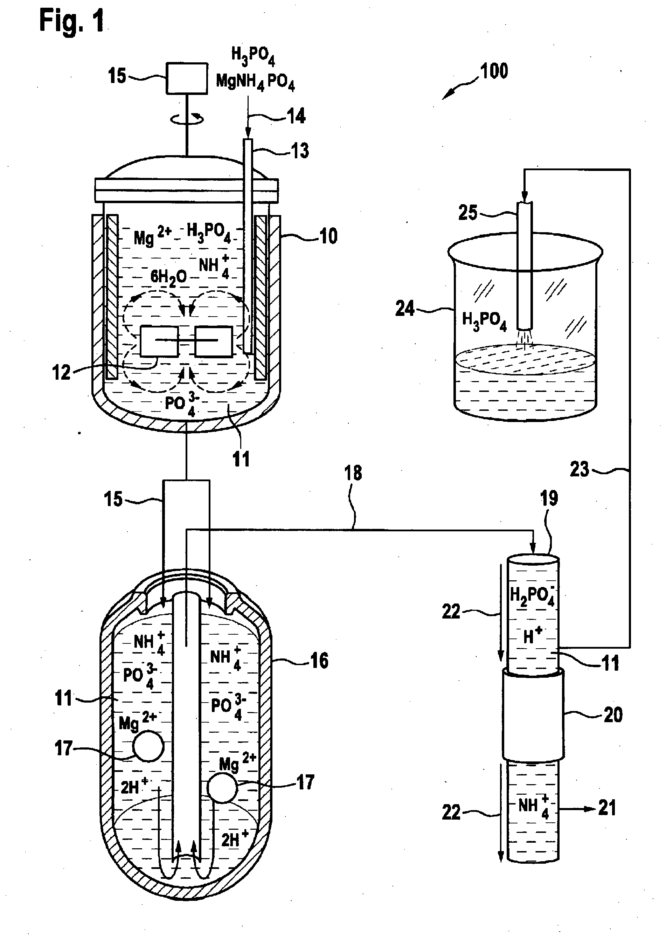

Das in Figur 1 veranschaulichte und in der Anlage 100 ablaufende Verfahren beginnt mit der Entkristallisierung des Magnesiumammoniumphsphats in der Vorrichtung zur Entkristallisierung von Kristallen 10. Die Vorrichtung 10 ist ein Rührbehälter mit einem von einem Motor 15 angetriebenes Rührwerk 12, in den zuvor durch die Eingangsleitung 13 der Vorrichtung 10 über eine externe Leitung 14 Magnesiumammoniumphsphat und Phosphorsäure eingeführt wurde. Die durch die Entkristallisierung erzeugten Bestandteile in der wässrigen Lösung 11 in der Vorrichtung 10 sind Mg²⁺, NH₄⁺, PO₄³⁻ und H₂O.

Nach der Entkristallisierung wird ein wässriger Strom mit dem entkristallisierten Magnesiumammoniumphsphat aus der Vorrichtung 10 über eine erste Leitung 15 in eine erste Vorrichtung zum Entfernen von Ionen und/oder Tauschen 16 geleitet. Die erste Vorrichtung 16 ist ein Ionentauscher, in dem mittels eines Ionenaustauscherharzes in Form Chelatharzes 17 Mg²⁺ gebunden und somit aus dem Strom entfernt wird. Es ergibt sich also ein Mg²⁺ abgereichter Strom.

Um das Ammonium, d.h. NH₄⁺ aus der wässrigen Lösung 11, die zudem noch den Bestandteil PO₄³⁻ enthält, zu entfernen, wird in einem nächsten Schritt ein wässriger Strom mit den Bestandteilen NH₄⁺, PO₄³⁻ und H₂O über eine zweite Leitung 18 in eine zweite Vorrichtung zum Entfernen und/oder Tauschen von Ionen 19 weitergeleitet. Die zweite Vorrichtung 19 ist ein Nanofilter, der eine Membran 20 mit entsprechender Porengröße aufweist. Der wässrige Strom wird in dem Nanofilter in einen Permeatstrom und einen Retentatstrom aufgeteilt. Das Permeat enthält NH₄⁺, während das Retentat die zurückgehaltene Phosphorsäure enthält.

Der Permeatstrom wird über die Permeatstromleitung 21 aus der Vorrichtung 19 abgeführt
Der Retentatstrom wird über Retentatstromleitung 23 in den Behälter 24 durch die Eingangsleitung 25 des Bechers 24 geführt und dort die Phosphorsäure für die weitere Bearbeitung bzw. Anwendung zwischengelagert.

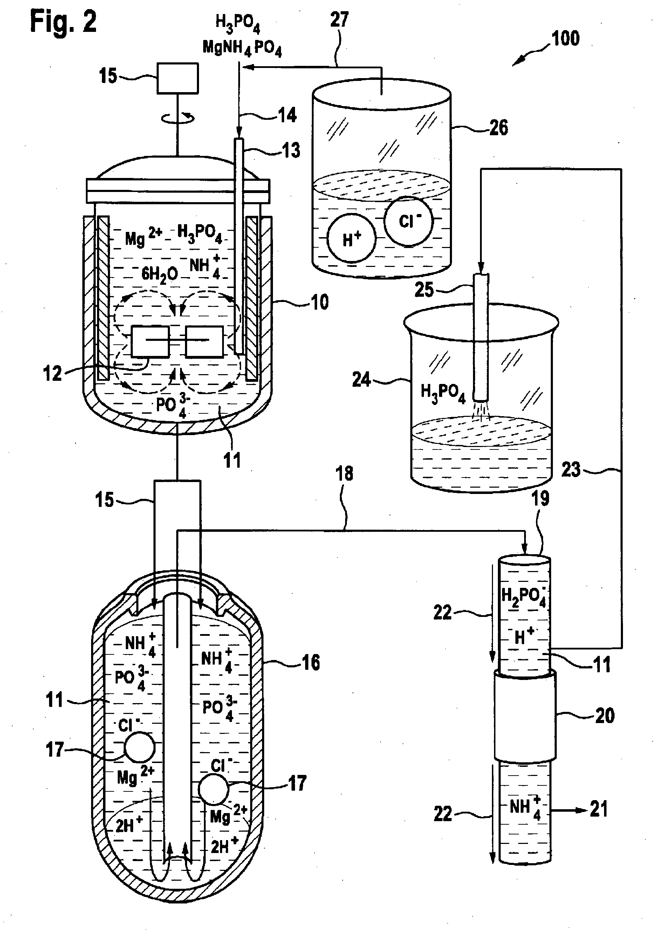

Bei der in Figur 2 gezeigten Ausführungsform des erfindungsgemäßen Verfahrens wird im Zuge der Entkristallisierung des Magnesiumammoniumphsphats in der Vorrichtung zur Entkristallisierung von Kristallen 10, d.h. in dem Rührbehälter, die wässrige Lösung 11 mit ihren Bestandteilen Mg²⁺, NH₄⁺, PO₄³⁻ und H₂O weiter gelöst, indem aus einem Salzsäurebehälter 26 der Vorrichtung 10 Salzsäure zugeführt wird und zwar bevor der wässrige Strom über die erste Leitung 15 in die erste Vorrichtung zum Entfernen von Ionen 16 geleitet wird. Die Zuführung der Salzsäure dient der Herstellung von Phosphorsäure im Rahmen des erfindungsgemäßen Verfahrens.

Danach wird wieder ein wässriger Strom mit dem entkristallisierten Magnesiumammoniumphosphat, jetzt jedoch angereichert mit Chlorid aus der Salzsäure aus der Vorrichtung über die erste Leitung 15 in die erste Vorrichtung zum Entfernen und/oder Tauschen von Ionen 16 geleitet, die auch wieder ein Ionentauscher ist, in dem wiederum mittels eines Ionenaustauscherharzes in Form eines Chelatharzes 17 Mg²⁺ und darüber hinaus Cl^{∼} gebunden und somit aus dem Strom entfernt wird.

Um das Ammonium, d.h. NH₄⁺ aus der wässrigen Lösung, die zudem noch den Bestandteil PO₄³⁻aufweist, zu entfernen, wird auch in der in Figur 2 gezeigten Ausführungsform des erfindungsgemäßen Verfahrens in einem nächsten Schritt ein wässriger Strom mit den Bestandteilen NH₄⁺, PO₄³⁻ und HaO über eine zweite Leitung 18 in eine zweite Vorrichtung zum Entfernen und/oder von Ionen 19 weitergeleitet. Die zweite Vorrichtung 19 ist ein Nanofilter, der eine Membran 20 mit entsprechender Porengröße aufweist. Der wässrige Strom wird in dem Nanofilter in einen Permeatstrom und Retentatstrom aufgeteilt. Das Permeat enthält NH₄⁺, während das Retentat die zurückgehaltene Phosphorsäure enthält.

Der Permeatstrom wird über die Permeatstromleitung 21 aus der Vorrichtung 19 abgeführt
Der Retentatstrom wird über Retentatstromleitung 23 in den Behälter 24 durch die Eingangsleitung 25 des Bechers 24 geführt und dort die Phosphorsäure für die weitere Bearbeitung bzw. Anwendung zwischengelagert.

## Patentansprüche

1. Verfahren zur Rückgewinnung von Phosphat, welches in kristallinem Magnesiumammoniumphosphat vorliegt,
**gekennzeichnet durch** folgende Schritte:
a) Bereitstellung und Zuführung von bereits existierendem Magnesiumammoniumphosphat in eine Vorrichtung zur Entkristallisierung von Kristallen (10) und Entkristallisierung des Magnesiumammoniumphosphats in seine Bestandteile mithilfe einer Säure, vorzugsweise einer Phosphorsäure und/oder Salzsäure, zur Erzeugung einer wässrigen Lösung (11) in der Vorrichtung (10);
b) Weiterleitung des entkristallisierten Magnesiumammoniumphosphats aus Schritt a) in eine erste Vorrichtung zum Entfernen und/oder Tauschen von Ionen (16) und Entfernen und/oder Tauschen von Mg²⁺in der ersten Vorrichtung (16);
c) Weiterleitung des resultierenden Ammoniumphosphats aus Schritt b) in eine zweite Vorrichtung zum Entfernen und/oder Tauschen von Ionen (19) und Entfernen und/oder Tauschen von Ammonium in der zweiten Vorrichtung (19).

2. Verfahren nach Anspruch 1, **dadurch gekennzeichnet, dass** die Entkristallisierung in dem Schritt a) in einem Rührbehälter, in der sich die wässrige Lösung (11) befindet, erfolgt.

3. Verfahren nach Anspruch 1 oder 2, **dadurch gekennzeichnet, dass** in dem Schritt b) das Entfernen und/oder Tauschen in der ersten Vorrichtung zum Entfernen und/oder Tauschen von Ionen (16) mittels Ionenaustausches und/oder Adsorptionsverfahrens erfolgt.

4. Verfahren nach einem der Ansprüche 1 bis 3, **dadurch gekennzeichnet, dass** in dem Schritt c) das Entfernen und/oder Tauschen in der zweiten Vorrichtung zum Entfernen und/oder Tauschen von Ionen (19) mittels Ionenaustausches und/oder Adsorptionsverfahrens und/oder Nanofiltration erfolgt.

5. Verfahren nach einem der vorhergehenden Ansprüche, **dadurch gekennzeichnet, dass** in der zweiten Vorrichtung zum Entfernen und/oder Tauschen von Ionen (19) verbleibendes Ammonium in eine dritte Vorrichtung zum Entfernen und/oder Tauschen von Ionen geleitet wird, in der das Entfernen und/oder Tauschen des verbleibenden Ammoniums mittels Ionenaustausches und/oder Adsorptionsverfahrens erfolgt.

6. Verfahren nach einem der vorhergehenden Ansprüche**,dadurch gekennzeichnet, dass** in dem Schritt b) das Entfernen und/oder Tauschen von Mg²⁺ in einem Batch-Prozess erfolgt.

7. Verfahren nach einem der vorhergehenden Ansprüche, **dadurch gekennzeichnet, dass** in dem Schritt a) Phosphorsäure in die Vorrichtung zur Entkristallisierung von Kristallen (10) geleitet wird.

8. Verfahren nach einem der vorhergehenden Ansprüche; **dadurch gekennzeichnet, dass** in dem Schritt a) Salzsäure und/oder Phosphorsäure in die Vorrichtung zur Entkristallisierung von Kristallen (10) geleitet wird.

9. Verfahren nach Anspruch 8, **dadurch gekennzeichnet, dass** in der ersten Vorrichtung zum Entfernen und/oder von Ionen (16) das Chlorid der Salzsäure entfernt wird.

10. Verfahren nach Anspruch 9, **dadurch gekennzeichnet, dass** resultierende Phosphorsäure in einen Phosphorsäurebehälter (23) geleitet wird.

11. Verfahren nach einem der vorhergehenden Ansprüche, **dadurch gekennzeichnet, dass** in die Vorrichtung zur Entkristallisierung von Kristallen (10) bereits vorhandenes Magnesiumammoniumphosphat geleitet wird.

12. Anordnung (100) zur Durchführung des Verfahrens gemäß einem der Ansprüche 1 bis 11, **gekennzeichnet durch** eine Vorrichtung zur Entkristallisierung von Kristallen (10), die über eine erste Leitung (15) mit einer ersten Vorrichtung zum Entfernen und/oder Tauschen von Ionen (16) verbunden ist, wobei die erste Vorrichtung zum Entfernen und/oder Tauschen von Ionen (16) über eine zweite Leistung (18) mit einer zweiten Vorrichtung zum Entfernen und/oder von Ionen (19) verbunden ist.

13. Anordnung nach Anspruch 12, **dadurch gekennzeichnet, dass** sowohl die erste als auch die zweite Vorrichtung zum Entfernen und/oder Tauschen von Ionen (16,19) ein Ionenaustauscher und/oder ein Nanofilter und/oder eine Vorrichtung zur Adsorption ist.

14. Anordnung nach Anspruch 12 oder 13, **dadurch gekennzeichnet, dass** die zweite Vorrichtung (19) zum Entfernen und/oder Tauschen von Ionen über eine dritte Leitung mit einer dritten Vorrichtung zum Entfernen und/oder Tauschen von Ionen verbunden ist.

15. Anordnung nach einem der Ansprüche 12 bis 14, **gekennzeichnet durch** einen Salzsäurebehälter (25), der über eine vierte Leitung (26) mir der Vorrichtung zur Entkristallisierung von Kristallen (10) verbunden ist.
